# EUROPÄISCHE PATENTSCHRIFT

(11) **EP 3 657 012 B1**
(45) Veröffentlichungstag und Bekanntmachung des Hinweises auf die Patenterteilung: **02.06.2021**
(21) Anmeldenummer: 18207201.7
(22) Anmeldetag: 20.11.2018
(51) Int. Cl.: F03D 1/06, F03D 15/00, F03D 13/20, F03D 13/10, F03D 80/00, F16B 5/02, F16B 7/18, F16B 19/02, F16B 35/02, F16B 35/00

(54) **ZENTRIERBOLZEN FÜR DIE HERSTELLUNG EINER FLANSCHVERBINDUNG ZWISCHEN ZWEI BAUTEILEN EINER WINDENERGIEANLAGE, VERFAHREN ZUM HERSTELLEN EINER FLANSCHVERBINDUNG SOWIE FLANSCHVERBINDUNG**
CENTRING PIN FOR THE CREATION OF A FLANGE JOINT BETWEEN TWO COMPONENTS OF A WIND POWER PLANT, METHOD FOR PRODUCING A FLANGE CONNECTION AND FLANGE CONNECTION
BOULONS DE CENTRAGE DESTINÉS À LA FABRICATION D'UN RACCORDEMENT À BRIDE ENTRE DEUX COMPOSANTS D'UNE ÉOLIENNE, PROCÉDÉ DE FABRICATION D'UN RACCORDEMENT À BRIDE AINSI QUE RACCORDEMENT À BRIDE

(43) Veröffentlichungstag der Anmeldung: 27.05.2020
(73) Patentinhaber: Nordex Energy SE & Co. KG, 22419 Hamburg (DE)
(72) Erfinder: Werner, Markus, 24242 Felde (DE)
(74) Vertreter: Epping - Hermann - Fischer

(56) Entgegenhaltungen:
- EP-A1- 3 193 011
- EP-A1- 3 369 948
- CN-U- 205 243 733
- KR-B1- 101 345 716

## Beschreibung

Zentrierbolzen für die Herstellung einer Flanschverbindung zwischen zwei Bauteilen einer Windenergieanlage, Verfahren zum Herstellen einer Flanschverbindung sowie Flanschverbindung Die Erfindung betrifft einen Zentrierbolzen zur Herstellung einer Flanschverbindung zwischen zwei Bauteilen einer Windenergieanlage. Die Erfindung betrifft auch ein Verfahren zum Herstellen einer Flanschverbindung sowie eine Flanschverbindung.

Windenergieanlagen mit Windenergieanlagenrotorblättern sind aus dem Stand der Technik vielfach bekannt und werden verwendet, um Windenergie in elektrische Energie umzuwandeln. Windenergieanlagen weisen eine Vielzahl von Bauteilen auf, die mittels einer Flanschverbindung verbunden werden. Beispielsweise im Bereich einer Rotorblattwurzel weisen die Rotorblätter einen Rotorblattanschluss mit einer Vielzahl von Bohrungen auf, etwa in das Laminat integrierte Hülsen, über welche die Rotorblätter mittels Befestigungsschraubbolzen mit einem Lagerring eines sogenannten Pitchlagers oder mit einem mit dem Lagerring verbundenen Bauteil wie z.B. einem Extender der Windenergieanlage verbunden werden. Die Hülsen können Teil eines Flanscheinlegers für den Rotorblattanschluss sein. Ein derartiger Aufbau ist beispielsweise aus der internationalen Anmeldung WO 2015/124568 A1 bekannt. EP 3193011 A1 offenbart einen Bolzen mit einer Zentrierhülse.

Alternativ finden Flanschverbindungen mit oder ohne Hülsen auch bei der Verbindung von Rotorblattsegmenten Verwendung, die der Länge nach angeordnet und zusammengefügt, ein Rotorblatt bilden. Die Hülsen befinden sich dann im Laminat eines Teilungsflansches der Rotorblattsegmente. Die Rotorblattsegmente werden mittels Schraubbolzen direkt oder über geeignete Zwischenstücke miteinander verbunden.

Eine Aufgabe, die der Erfindung zugrunde liegt, ist es, ein Konzept für eine Flanschverbindung zweier Bauteile einer Windenenergieanlage anzugeben, welches eine verlässliche Herstellung der Flanschverbindung ermöglicht.

Gemäß einem ersten Aspekt wird ein Zentrierbolzen für die Herstellung einer Flanschverbindung zwischen zwei Bauteilen einer Windenergieanlage offenbart, insbesondere zwischen einem Rotorblatt und einer Rotornabe oder zwischen einer Rotorwelle und einer Rotornabe. Der Zentrierbolzen weist einen Schaft mit einer Längsachse auf. Der Schaft weist entlang der Längsachse einen Abschnitt mit einem ersten Außendurchmesser und einem dem ersten Abschnitt nachfolgenden zweiten Abschnitt auf, der einen im Vergleich zu dem ersten Außendurchmesser kleineren zweiten Außendurchmesser aufweist. Der Schaft weist eine Zentrierhülse auf, die auf den zweiten Abschnitt des Schafts aufgeschoben ist. Die Zentrierhülse ist um die Längsachse drehbar am Schaft gelagert. Die Zentrierhülse ist axial bezüglich der Längsachse gegen Verschieben gesichert. Die Zentrierhülse weist einen Hülsenaußendurchmesser auf, der größer als der erste Außendurchmesser ist. Der Zentrierbolzen ist ausgebildet, zum Herstellen der Flanschverbindung in zwei zueinander fluchtenden Bohrungen von Flanschanschlüssen der beiden zu verbindenden Bauteile derart montiert zu werden, dass die Zentrierhülse in den zwei fluchtenden Bohrungen zum Zentrieren der Bauteile angeordnet ist.

Als Zentrierbolzen wird hier und im Folgenden ein Bolzen verstanden, der der Zentrierung der beiden Bauteile zueinander dient. Der Zentrierbolzen wird zum Herstellen der Flanschverbindung in eines der beiden Bauteile eingeschraubt. Zusätzlich werden die beiden Bauteile mittels einer Vielzahl von Lagerbolzen (auch Schraubbolzen oder Dehnbolzen) zum Herstellen der Flanschverbindung fest verbunden. Die Lagerbolzen haben typischerweise deutlich höhere Festigkeiten als die Zentrierbolzen, da diese dauerhaft für die Verbindung beider Bauteile sorgen. Die Lagerbolzen sind zudem nicht für die Zentrierung geeignet, weil diese typischerweise einen insb. im Flanschbereich taillierten Abschnitt aufweisen, um Biege- und Dehnkräfte besser aufnehmen zu können. Die Lagerbolzen haben keine Zentrierhülsen. Die Zentrierbolzen werden nach Herstellung der Flanschverbindung, d.h. nach Sichern aller Lagerbolzen, wieder entfernt und durch Lagerbolzen ersetzt, da die Zentrierbolzen im bestimmungsgemäßen Betrieb als Lagerbolzen leicht brechen bzw. versagen würden. Dabei werden die Zentrierbolzen aus einer der beiden fluchtenden Bohrungen, die typischerweise als Durchgangsbohrung ausgeführt ist, herausmontiert. Letztlich sind die beiden Bauteile somit ausschließlich über Lagerbolzen verbunden.

Der beschriebene Zentrierbolzen ermöglicht eine besonders einfache und sichere Zentrierung der beiden zu montierenden Bauteile, wobei der Zentrierbolzen anschließend wieder aus den Bohrungen der beiden verbundenen Bauteile entfernt und für andere Verbindungen wiederverwendet werden kann. Dies wird insbesondere durch verschiedene Details erreicht. Zum einem sind der Schaft und die entsprechenden Außendurchmesser so gewählt, dass der Hülsenaußendurchmesser die beiden Außendurchmesser der Schaftabschnitte nominell übertrifft. Dadurch ist sichergestellt, dass die Zentrierung im Flanschbereich im Wesentlichen nur über die Zentrierhülse erfolgt. Zum anderen ist die Hülse drehbar gelagert und zudem axial gesichert, so dass der Zentrierbolzen nach dem Herstellen der Flanschverbindung wieder durch herausdrehen und -ziehen entfernt werden kann. Beispielsweise wird der Zentrierbolzen aus zumindest einer der Bohrungen herausgeschraubt. Die beschriebene Ausführung des Zentrierbolzens ermöglicht, dass dieser bei der Demontage im Wesentlichen nicht beschädigt wird und keine Reste des Zentrierbolzens, etwa der Zentrierhülse, in den entsprechenden Bohrungen verbleiben. Dadurch können anschließend Lagerbolzen in die frei gewordenen Bohrungen eingesetzt werden. Somit können die Zentrierbolzen erneut verwendet werden.

Ein weiterer Vorteil, der zugleich eine bevorzugte Weiterbildung darstellt, liegt darin, dass die Hülse einstückig ausgebildet sein kann. Die Einstückigkeit ermöglicht eine kostengünstigere und einfachere Fertigung sowie Herstellung des Zentrierbolzens. Zudem trägt sie dazu bei, dass die Hülse den mechanischen Kräften beim Entfernen der Zentrierbolzen standhält und nicht versagt, was wie oben angedeutet dazu führen kann, dass Reste in den Bohrungen verbleiben. Diese Reste müssten aufwendig entfernt werden. Schlimmstenfalls könnten die Bohrungen nicht mehr für einen Lagerbolzen verwendet werden, wodurch Stabilitätsprobleme entstehen können.

Ein weiterer Vorteil in der Verwendung der offenbarten Zentrierhülse liegt darin, dass keine Verwendung von Schmiermitteln beim Herstellen der Flanschverbindung erforderlich ist. Dadurch wird eine Kontamination der Verschraubung mit Fett verhindert, so dass keine Gefahr besteht, dass sich die Flanschverbindung beider Bauteile löst.

Die Bohrungen der Flanschanschlüsse sind in der Regel kreisbogenförmig angeordnet. Bevorzugt werden zwei, drei oder vier Zentrierbolzen bei der Herstellung der Flanschverbindung verwendet, diese können paarweise gegenüberliegend bzw. gleichmäßig über den Umfang verteilt angeordnet sind. Insgesamt sind zwei bis zwölf Zentrierbolzen denkbar. Auch wenn es dadurch streng genommen zu mechanischen Überbestimmtheiten kommt, können so Nachgiebigkeiten der zu verbindenden Bauteile einer Windenergieanlage, insbesondere Verformungen der Rotorblätter, kompensiert werden.

Der beschriebene Zentrierbolzen ist insbesondere für die Verbindung eines Rotorblatts mit einem entsprechenden Gegenbauteil an der Nabe, etwa einem Pitchlager oder einem Extender, geeignet. Dort werden bevorzugt drei bis sechs oder mehr solcher Zentrierbolzen verwendet. Der Zentrierbolzen eignet sich auch für die Positionierung von Nabe zu Welle, Pitchlager zu Nabe oder von Turmsegmenten zueinander. Aufgrund der höheren Steifigkeiten sind in diesen Fällen nur zwei solcher Zentrierbolzen zu bevorzugen.

Bei den beschriebenen Außendurchmessern handelt es sich beispielsweise um maximale Außendurchmesser der entsprechenden Schaftabschnitte bzw. der Zentrierhülse. Bevorzugt ist der Hülsenaußendurchmesser der größte Durchmesser des gesamten Zentrierbolzens. Es sei an dieser Stelle erwähnt, dass sich die Vergleiche der Durchmesser auf Maße und Toleranzen im Bereich von Zehntel Millimetern beziehen können.

Der Schaft des Zentrierbolzens besteht idealerweise aus einem duktilen aber hochfesten Stahl, um für genügend Festigkeit zu sorgen und beispielsweise tolerant gegenüber etwaigen Kerben zu sein. Die beiden Abschnitte sowie gegebenenfalls weitere Abschnitte des Schafts mit unterschiedlichen Durchmessern sind beispielsweise durch Wellenabsätze realisiert.

Der erste Abschnitt des Schafts weist beispielsweise ein axiales Ende des Zentrierbolzens auf. Der erste Abschnitt weist beispielsweise zumindest teilweise ein Außengewinde auf, über welches der Zentrierbolzen über eine Bolzenmutter an einem der Bauteile gesichert werden kann. Der erste und zweite Abschnitt sind beispielsweise direkt aneinander anschließend angeordnet.

Gemäß einer Ausführungsform ist die Zentrierhülse mittels eines Sicherungsrings axial bezüglich der Längsachse am Schaft formschlüssig gesichert ist. Alternativ ist die Zentrierhülse mittels einer Sicherungshülse axial bezüglich der Längsachse am Schaft formschlüssig gesichert. In beiden Fällen wird eine sichere, formschlüssige axiale Sicherung ermöglicht. Dadurch werden die obigen Vorteile und Funktionen ermöglicht. Der Sicherungsring ermöglicht eine kostengünstige und einfache Fertigung. Die Sicherungshülse ermöglicht die Integration weiterer Funktionen wie beispielsweise ein Außengewinde zum Einschrauben des gesamten Zentrierbolzens in eine Bohrung. Der Außendurchmesser des Sicherungsrings bzw. der Sicherungshülse ist beispielsweise kleiner als der Außendurchmesser der Zentrierhülse.

Gemäß einer Ausführungsform sind zwischen der Sicherungshülse bzw. dem Sicherungsring und der Zentrierhülse noch eine oder mehrere Abstandshülsen angeordnet, die auf den Schaft aufgeschoben sind. Dadurch kann eine besonders lange Schaftform erreicht werden. Dies ist beispielsweise vorteilhaft mit Blick auf die Festigkeit der Flanschverbindung und/oder ermöglicht das Überbrücken großer Distanzen bei der Flanschverbindung. Die Sicherungshülse bzw. der Sicherungsring haben kleinere Durchmesser als die Zentrierungshülse.

Gemäß einer Ausführungsform ist die Sicherungshülse auf den Schaft aufgeschraubt. Dadurch wird eine mechanisch besonders sichere axiale Sicherung erreicht, die dem nachträglichen Entfernen des Zentrierbolzens standhält. Besonders bevorzugt ist die Sicherungshülse mittels eines Linksgewindes mit dem Schaft verbunden.

Gemäß einer Ausführungsform ist die Sicherungshülse auf einen dritten Abschnitt des Schafts aufgeschraubt, der nachfolgend zu dem ersten und zweiten Abschnitt angeordnet ist und einen dritten Außendurchmesser aufweist, der kleiner als der zweite Außendurchmesser ist. Dadurch kann beispielsweise im Vergleich zu einem Aufschieben auf den zweiten Abschnitt eine Sicherungshülse mit einer größeren Wandstärke verwendet werden, die alleine oder zusammen mit den Abstandshülsen die Zentrierhülse axial sichert. Dies trägt zu einer besonders stabilen Anordnung bei. Die eine oder mehreren Abstandshülsen können auf dem zweiten, dritten oder beiden Abschnitten des Schafts angeordnet sein. Der dritte Abschnitt ist beispielsweise direkt an den zweiten Abschnitt anschließend angeordnet. Auch bei dem dritten Außendurchmesser handelt es sich beispielsweise um einen maximalen Außendurchmesser des dritten Abschnitts.

Gemäß einer Ausführungsform weist die Sicherungshülse ein Außengewinde zum Einschrauben in ein Innengewinde des einen der beiden Bauteile auf. Die Sicherungshülse ermöglicht dadurch eine weitere Funktion, nämlich das Einschrauben des Zentrierbolzens mit einem Ende in die Bohrung des einen Bauteils, etwa des Rotorblatts. Das Vorsehen des Außengewindes an der Sicherungshülse ermöglicht auch, dass der Bolzen durch Austausch der Sicherungshülse einfach an unterschiedliche Bohrungen oder Bauteile angepasst werden kann, ohne notwendigerweise einen vollständig anders dimensionierten Zentrierbolzen zu verwenden. Alternativ kann jedoch das Außengewinde anstelle an der Sicherungshülse auch an dem Schaft selbst ausgebildet sein, beispielsweise an einem weiteren Abschnitt mit verringerten Durchmesser. Das Innengewinde des einen Bauteiles ist beispielsweise an einem Insert wie einer Lagerhülse vorgesehen. Das Innengewinde kann jedoch auch in einem anderen Bauteil oder einer anderen Komponente ausgebildet sein.

Gemäß einer Ausführungsform weist die Sicherungshülse ein Material auf, welches Notlaufeigenschaften gewährleistet. Dies ermöglicht beispielsweise ein gutes Lösen der eingeschraubten Sicherungshülse aus der entsprechenden Bohrung, wenn die Zentrierbolzen wie oben beschrieben entfernt werden. Insbesondere ist das Material so gewählt, dass beispielsweise beim Einschrauben kein "Fressen" auftreten kann. Das Material ist beispielsweise Bronze, Rotguss, PTFE, oder ein anderer Festschmierstoff, der fest mit der Hülse verbunden ist, oder aus dem die Hülse besteht. Schmiermittel wie oben beschrieben können entfallen.

Gemäß einer Ausführungsform weist die Zentrierhülse bezüglich der Längsachse an einem dem ersten Abschnitt zugewandten axialen Ende eine umlaufende ersten konisch zulaufenden Abschnitt oder erste Fase auf. Dies erleichtert das Einsetzen des Zentrierbolzens in einer entsprechenden Bohrung bzw. das Demontieren des Zentrierbolzens aus den zwei miteinander verbundenen Bauteilen.

Gemäß einer Ausführungsform weist die Zentrierhülse bezüglich der Längsachse an einem dem ersten Abschnitt abgewandten axialen Ende einen zweiten konisch zulaufenden Abschnitt oder zweite Fase auf. Die zweite Fase erleichtert das Montieren des Zentrierbolzens in einer entsprechenden Bohrung, insb. wenn der Zentrierbolzen zumindest teilweise in eine entsprechende Bohrung eines der Bauteile eingesetzt wird.

Gemäß einer Ausführungsform dient die zweite Fase als Anschlag oder Anschlagsfläche bei der Montage in einer Bohrung eines der beiden Bauteile. Dadurch begrenzt die zweite Fase im Zusammenspiel mit der entsprechenden Bohrung das Einführen des Zentrierbolzens. Optional wird dadurch ausschließlich über die zweite Fase ein Kontakt der Zentrierhülse mit der Innenwandung der Bohrung des einen Bauteils (etwa einer Lagerhülse eines Rotorblattflansches) im Flanschbereich hergestellt. Dadurch ist eine definierte Montage und Zentrierung ermöglicht.

Gemäß einer Ausführungsform weist die Zentrierhülse ein Gleitmaterial auf, welches Notlaufeigenschaften gewährleistet. Es gilt das in Bezug zur Sicherungshülse Gesagte analog. Ein solches Material ermöglicht besonders gut das Demontieren des Zentrierbolzens aus fluchtenden Bohrungen der miteinander verbundenen zwei Bauteile.

Gemäß einem zweiten Aspekt wird ein Verfahren zum Herstellen einer Flanschverbindung zwischen zwei Bauteilen einer Windenergieanlage offenbart, insbesondere zwischen einem Rotorblatt und einer Rotornabe oder zwischen einer Rotorwelle und einer Rotornabe. Das Verfahren weist die folgenden Schritte auf:
- Bereitstellen eines Zentrierbolzens nach einer der zuvor beschriebenen Ausführungsformen,
- Bereitstellen einer Vielzahl von Lagerbolzen,
- Montieren des Zentrierbolzens in einer entsprechenden Bohrung eines Flanschanschlusses des ersten Bauteils, so dass dieser aus der entsprechenden Bohrung herausragt,
- Montieren der Vielzahl von Lagerbolzen in entsprechenden Bohrungen des Flanschanschlusses des ersten Bauteils, so dass diese aus den entsprechenden Bohrungen herausragen,
- Ausrichten der beiden Bauteile derart, dass die Bohrungen des Flanschanschlusses des ersten Bauteils und Bohrungen eines Flanschanschlusses des zweiten Bauteils fluchtend zueinander angeordnet sind,
- Zusammenfügen der beiden Bauteile und Einführen sämtlicher montierter Bolzen in die entsprechenden Bohrungen des Flanschanschlusses des zweiten Bauteils, so dass die Zentrierhülse des Zentrierbolzens in zwei entsprechenden zueinander fluchtenden Bohrungen angeordnet ist und dadurch die beiden Bauteile zueinander zentriert werden;
- Sichern des Zentrierbolzens und der Lagerbolzen zum Herstellen der Flanschverbindung.

Die Verfahren ermöglichen im Wesentlichen die oben genannten Vorteile und Funktionen. Die Ausführungen in Bezug zu dem Zentrierbolzen können entsprechend in dem Verfahren Niederschlag finden und dieses analog weiterbilden.

Das Sichern der Bolzen bedeutet hier und im Folgenden ein Festlegen, etwa Verschrauben.

Gemäß einer Ausführungsform werden die Zentrierbolzen analog zu oben nach dem Herstellen der Flanschverbindung aus den Bohrungen demontiert und durch Lagerbolzen ersetzt.

Gemäß eines dritten Aspekts wird eine Flanschverbindung zwischen zwei Bauteilen einer Windenergieanlage, insbesondere zwischen einem Rotorblatt und einer Rotornabe oder zwischen einer Rotorwelle und einer Rotornabe, offenbart. Jedes der beiden Bauteile weist einen Flanschanschluss mit mehreren Bohrungen auf. Die Bauteile sind so aneinander angeordnet und miteinander verbunden, dass die Bohrungen zueinander fluchten. Ein oder mehrere Zentrierbolzen nach einer der obigen Ausführungsformen sind in jeweils zwei zueinander fluchtenden Bohrungen der Flanschanschlüsse beider Bauteile montiert, so dass jede Zentrierhülse eines Zentrierbolzens in den jeweils zwei fluchtenden Bohrungen zum Zentrieren der Bauteile angeordnet ist.

Die Flanschverbindung ermöglicht im Wesentlichen die oben genannten Vorteile und Funktionen. Die Flanschverbindung kann entsprechend den obigen Ausführungsformen in Bezug zu dem Zentrierbolzen weitergebildet sein.

Weitere Vorteile, Merkmale und Weiterbildungen ergeben sich aus den nachfolgenden, in Verbindung mit den Figuren erläuterten Ausführungsbeispielen. Gleiche, gleichartige oder gleich wirkende Elemente sind in den Figuren mit den gleichen Bezugszeichen versehen. Aus Gründen der Übersichtlichkeit sind gegebenenfalls nicht alle dargestellten Elemente in sämtlichen Figuren mit zugehörigen Bezugszeichen gekennzeichnet.

In den Figuren zeigen:
Figur 1 eine schematische Darstellung einer Windenergieanlage gemäß einem Ausführungsbeispiel,
Figur 2 eine schematische Darstellung eines Rotorblatts der Windenergieanlage,
Figur 3 eine schematische Querschnittsdarstellung eines Flanscheinlegers mit einem Flanschanschluss gemäß einem Ausführungsbeispiel der Erfindung,
Figur 4 eine Querschnittsdarstellung einer Flanschverbindung gemäß einem Ausführungsbeispiel der Erfindung,
Figur 5 eine schematische Querschnittsdarstellung eines Zentrierbolzens der Flanschverbindung gemäß einem Ausführungsbeispiel der Erfindung,
Figur 6 eine schematische Querschnittsdarstellung einer Zentrierhülse des Zentrierbolzens gemäß einem Ausführungsbeispiel der Erfindung, und
Figuren 7 ein schematisches Ablaufdiagramm eines Verfahrens zum Herstellen einer Flanschverbindung gemäß einem Ausführungsbeispiel der Erfindung.

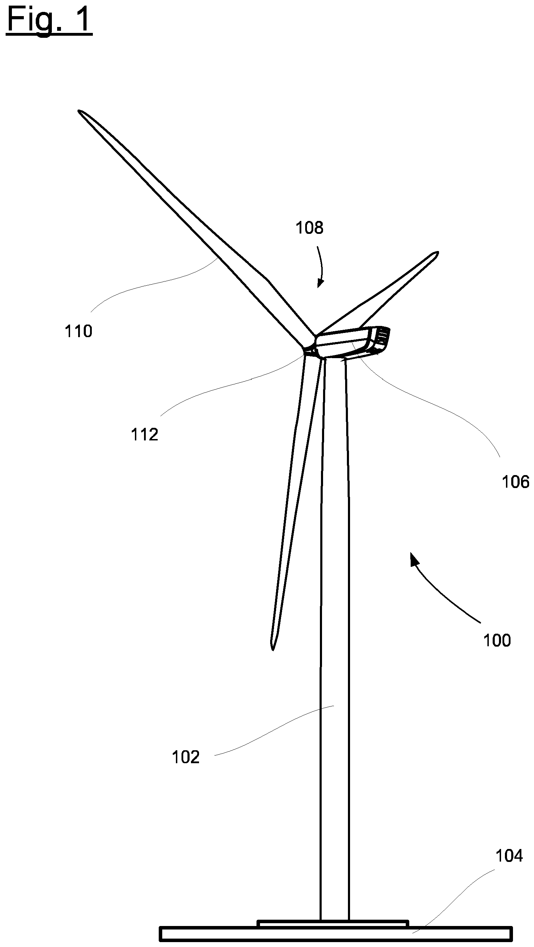

Figur 1 zeigt eine schematische Darstellung einer Windenergieanlage 100. Die Windenergieanlage 100 weist einen Turm 102 auf. Der Turm 102 ist mittels eines Fundaments 104 auf einem Untergrund befestigt. An einem dem Untergrund gegenüberliegenden Ende des Turms 102 ist eine Gondel 106 drehbar gelagert. Die Gondel 106 weist beispielsweise einen Generator auf, der über eine Rotorwelle (nicht gezeigt) mit einem Rotor 108 gekoppelt ist. Der Rotor 108 weist ein oder mehrere (Windenergieanlagen)Rotorblätter 110 auf, die an einer Rotornabe 112 angeordnet sind.

Der Rotor 108 wird im Betrieb durch eine Luftströmung, beispielsweise Wind, in Rotation versetzt. Diese Rotationsbewegung wird über die Rotorwelle und gegebenenfalls ein Getriebe auf den Generator übertragen. Der Generator wandelt die kinetische Energie des Rotors 108 in elektrische Energie um.

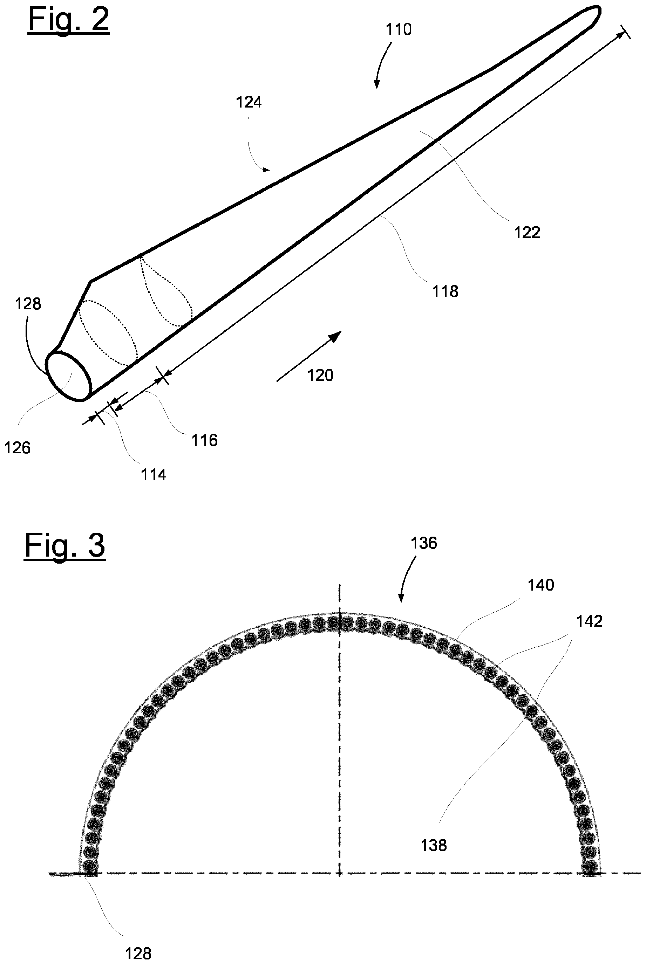

Figur 2 zeigt ein exemplarisches Windenergieanlagenrotorblatt 110. Das Rotorblatt 110 hat die Form eines herkömmlichen Rotorblattes und hat einen Rotorblattwurzelbereich 114, der der Rotornabe 112 zugewandt ist. Der Rotorblattwurzelbereich 114 hat typischerweise einen im Wesentlichen kreisrunden Querschnitt. An den Rotorblattwurzelbereich 114 schließen sich ein Übergangsbereich 116 und ein Profilbereich 118 des Rotorblatts 110 an. Das Rotorblatt 110 hat bezüglich einer Längserstreckungsrichtung 120 eine Druckseite 122 und eine gegenüberliegende Saugseite 124. Das Rotorblatt 110 ist im Inneren im Wesentlichen hohl ausgebildet.

Im Rotorblattwurzelbereich 114 ist ein Rotorblattanschluss 126 mit einem Flanschanschluss 128 vorgesehen, mittels welchem das Rotorblatt 110 mit einem Pitchlager oder einem Extender mechanisch verbunden wird.

Zur Herstellung eines Flanschanschlusses 128 für den Rotorblattanschluss 126 ist beispielsweise ein Flanscheinleger 136 vorgesehen, wie er in Figur 3 dargestellt ist. Figur 3 zeigt ein teilkreisförmiges Segment des Flanscheinlegers 136 in einer schematischen Querschnittsansicht. Der Flanscheinleger 136 weist den Flanschanschluss 128 auf und wird als Einlegeteil in eine Fertigungsform zur Herstellung des gesamten Rotorblattes 110 eingelegt. Der Aufbau umfasst eine innere Laminatlage 138 sowie eine äußere Laminatlage 140, die kreisbogenartig verlaufen und in welche kreisbogenartig in Längserstreckungsrichtung 120 Lagerhülsen 142 mit einem Innengewinde eingebettet sind. Bei den Hülsen 142 handelt es sich beispielsweise um Stahlhülsen.

Es ist jedoch auch denkbar, dass kein Flanscheinleger 136 vorgesehen ist und die Lagerhülsen 142 direkt in das Rotorblatt 110, etwa in Rotorblatthalbschalen, eingebettet und laminiert werden und den Flanschanschluss 128 bilden. Der Aufbau eines solchen Flanschanschlusses 128 ist analog.

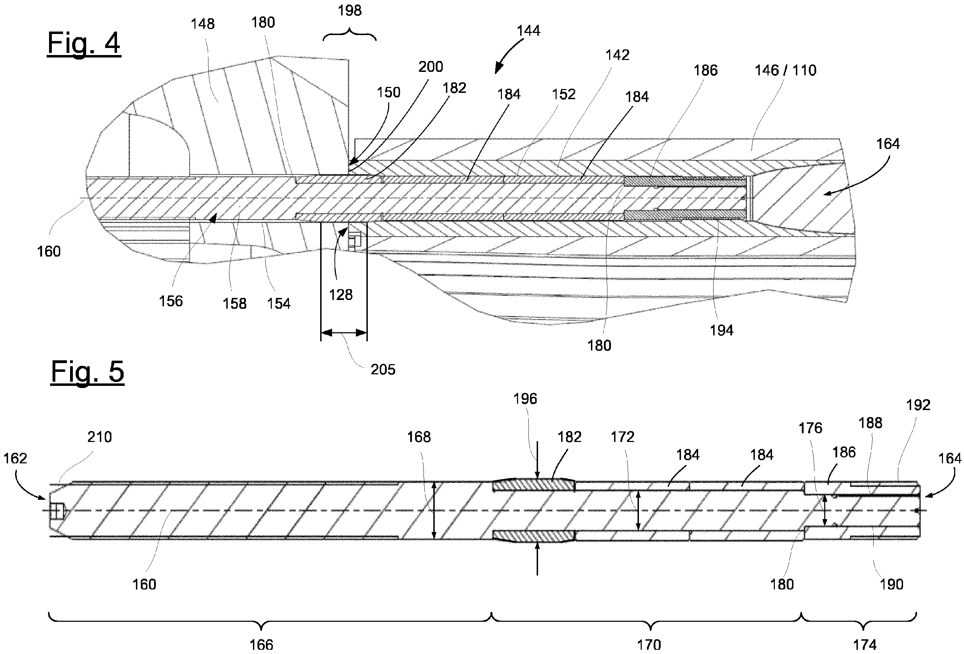

Figur 4 zeigt schematisch eine Teilschnittansicht durch eine Flanschverbindung 144 zweier Bauteile 146 und 148 einer Windenergieanlage gemäß einem Ausführungsbeispiel der Erfindung. Im dargestellten Ausführungsbeispiel handelt es sich bei dem ersten Bauteil 146 um ein Rotorblatt 110, welches einen Flanschanschluss 128 mit Lagerhülsen 142 - wie oben beschrieben und in Fig. 3 dargestellt - aufweist. Bei dem zweiten Bauteil 148 handelt es sich um einen Extender zum Anschluss des Rotorblatts 110 an die Rotornabe 112. Der Extender hat einen korrespondierenden weiteren Flanschanschluss 150. Die Lagerhülsen 142 haben jeweils eine erste Bohrung 152. Der weitere Flanschanschluss 150 weist zu den ersten Bohrungen 152 korrespondierende, fluchtende zweite Bohrungen 154 auf, die als Durchgangsbohrungen ausgebildet sind. Figur 4 zeigt den Schnitt durch ein Bohrungspaar beider Bauteile. Über die Bohrungen 152, 154 werden die beiden Bauteile 146, 148 mittels Bolzen miteinander fest verbunden.

Für die Herstellung der Flanschverbindung 144 werden zwei oder mehrere Zentrierbolzen 156 gemäß einem Ausführungsbeispiel der Erfindung verwendet, wovon einer in Figur 4 gezeigt ist. Ein Zentrierbolzen 156 dient wie eingangs beschrieben der Zentrierung beider Bauteile 146, 148 zueinander. Nach der Zentrierung werden die beiden Bauteile über eine Vielzahl von Lagerbolzen (nicht dargestellt) miteinander fest verbunden. Letztlich werden die Zentrierbolzen 156 wieder entfernt und durch weitere Lagerbolzen ersetzt. Figur 5 stellt einen Zentrierbolzen 156 in Isolation in einer Schnittansicht dar.

Im Folgenden wird der Zentrierbolzen 156 und die Flanschverbindung 144 detailliert beschrieben.

Der Zentrierbolzen 156 hat einen Schaft 158, welcher sich entlang einer Längsachse 160 von einem ersten axialen Ende 162 zu einem zweiten axialen Ende 164 erstreckt. Die Längsachse 160 bildet im Beispiel eine Rotationssymmetrieachse. Der Schaft 158 ist aus einem Stahlmaterial gefertigt. Ausgehend von dem ersten Ende 162 hat der Schaft 158 entlang der Längsachse 160 einen ersten Abschnitt 166 mit einem ersten Außendurchmesser 168, einen zweiten Abschnitt 170 mit einem zweiten Außendurchmesser 172 und einen dritten Abschnitt 174 mit einem dritten Außendurchmesser 176. Der erste Abschnitt 166 weist das erste Ende 162 auf und der dritte Abschnitt 174 weist das zweite Ende 164 auf. Der erste Außendurchmesser 168 ist größer als der zweite Außendurchmesser 172, der wiederum größer als der dritte Außendurchmesser 176 ist. Die drei Abschnitte 166, 170 und 174 sind über Wellenabsätze 180 getrennt.

Der erste Abschnitt 166 hat ein erstes Außengewinde 178. Auf den zweiten Abschnitt 170 ist eine einstückige Zentrierhülse 182 gegen den entsprechenden Wellenabsatz 180 aufgeschoben. Die Zentrierhülse 182 ist im Ausführungsbeispiel aus Bronze (einem Material mit Notlaufeigenschaften) gefertigt. Die Zentrierhülse 182 ist drehbar um die Längsachse 160 am Schaft 158 angeordnet. Beispielsweise ist eine Spielpassung vorgesehen. Zudem sind zwei Abstandshülsen 184 auf den zweiten Abschnitt 170 gegen die Zentrierhülse aufgeschoben. Hierfür ist beispielsweise eine Wurfpassung vorgesehen. Auf den dritten Abschnitt 174 ist eine Sicherungshülse 186 aus Bronze (einem Material mit Notlaufeigenschaften) aufgeschraubt. Hierzu weist die Sicherungshülse 186 ein Innengewinde 188 auf, welches zu einem zweiten Außengewinde 190 des dritten Abschnitts 174 des Schafts 158 korrespondiert. Beide Gewinde 188 und 190 sind als Linksgewinde ausgebildet. Die Sicherungshülse 186 ist beispielsweise gegen einen Anschlag am Schaft 156, etwa ein axiales Ende des zweiten Außengewindes 190, aufgeschraubt. Die Sicherungshülse 186 ist so ausgebildet und auf den dritten Abschnitt 174 aufgeschraubt, dass über die beiden Abstandshülsen 184 die Zentrierhülse 182 axial bezüglich der Längsachse 160 formschlüssig gesichert ist. Ein kleines axiales Spiel zwischen der Zentrierhülse 182 und der Abstandshülse 184, zwischen den Abstandshülsen 184 und/oder zwischen der Abstandshülse 184 und der Sicherungshülse 186, etwa im Bereich weniger Zehntel Millimeter, ist denkbar.

Die Sicherungshülse 186 weist zudem ein drittes Außengewinde 192 auf, mittels welchem der Zentrierbolzen 156 in die Lagerhülse 142, die ein entsprechendes zweites Innengewinde 192 aufweist, eingeschraubt ist.

Die Zentrierhülse 182 weist einen Hülsenaußendurchmesser 196 auf, der größer als die Außendurchmesser 168, 172, 176 sowie die Außendurchmesser der Hülsen 184 und 186 ist.

Der Zentrierbolzen 156 ist so ausgebildet, dass bei der gezeigten Flanschverbindung 144, d.h. wenn die beiden Bauteile 146, 148 zusammengefügt sind, ein Passbereich 205 der Zentrierhülse 182 in einem Flanschbereich 198 der beiden verbundenen Bauteile 146 und 148 angeordnet ist. Der Flanschbereich 198 meint einen axialen Bereich bzgl. der Längsachse 160 um Passflächen 200 beider zusammengefügter Bauteile 146 und 148. Mittels der Zentrierhülse 182 werden die beiden Bauteile 146, 148 zueinander zentriert. Über eine nicht dargestellte Bolzenmutter, die von der Seite des ersten axialen Endes 162 auf den ersten Abschnitt 166 aufgeschraubt wird, ist der Zentrierbolzen 156 fest verschraubt und somit gesichert. Analog werden sämtliche anderen Zentrierbolzen montiert.

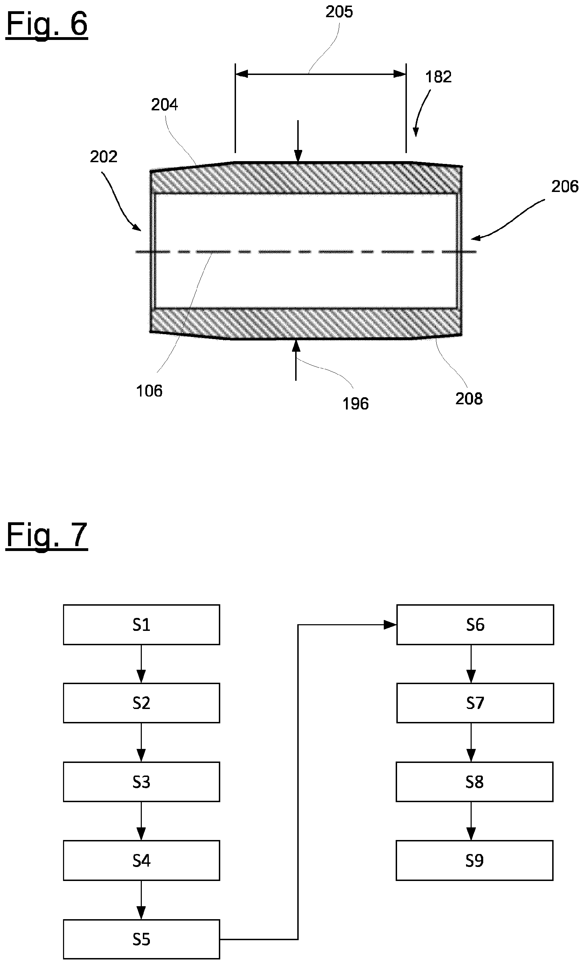

Figur 6 zeigt eine vergrößerte Schnittansicht durch die Zentrierhülse 182. Die Zentrierhülse 182 weist den Passbereich 205 auf, welcher im montierten Zustand des Zentrierbolzens in dem Flanschbereich 198 der beiden verbundenen Bauteile 146 und 148 angeordnet ist. An einem dem ersten Abschnitt 166 zugewandten axialen Ende 202 weist die Zentrierhülse 182 eine außen umlaufende erste Fase 204 auf, die dem Hülsenende 202 eine konische Gestalt verleiht. Die Zentrierhülse 182 weist an einem dem ersten Abschnitt 166 abgewandten axialen Ende 206 eine außen umlaufende zweite Fase 208 auf, die auch dem Hülsenende 206 eine konische Gestalt verleiht. Anstelle von Fasen können auch Verrundungen (Radien) ausgebildet sein. Die Fasen 204 und 208 erleichtern die Montage und Demontage der Zentrierbolzen 156. Zusätzlich kann auch das erste axiale Ende 162 wie in Figur 5 zu erkennen für selbige Zwecke eine dritte Fase 210 aufweisen sein. Optional dient die zweite Fase 208 als Anschlagselement beim Einschrauben des Zentrierbolzens 156 in der ersten Bohrung 152, in welcher sich eine entsprechende Gegenfase befindet. Dadurch ist der Zentrierbolzen 156 nur mit der Sicherungshülse 186 und über die zweite Fase 208 in Kontakt mit der Lagerhülse 142. Mit anderen Worten ist der Zentrierbolzen 156 im Flanschbereich 198 nur über die zweite Fase 208 in Kontakt mit der Lagerhülse 142.

Der beschriebene Zentrierbolzen 156 ermöglicht die eingangs genannten Vorteile und Funktionen. Insbesondere ermöglicht der Zentrierbolzen 156, dass dieser nach Verschrauben sämtlicher Lagerbolzen wieder entfernt werden kann. Details der Montage bzw. der Herstellung der Flanschverbindung werden anhand des schematischen Ablaufdiagramms der Figur 7 erläutert.

In einem ersten Schritt S1 werden vier der oben beschriebenen Zentrierbolzen 156 bereitgestellt.

In einem nächsten Schritt S2 wird eine Vielzahl von Lagerbolzen bereitgestellt.

In einem nächsten Schritt S3 werden die Zentrierbolzen 156 gleichmäßig über den Umfang des Flanschanschlusses 128 des ersten Bauteils 146 verteilt montiert. Hierzu wird jeder Zentrierbolzen 156 in die entsprechende Bohrung 152 einer Lagerhülse 142 eingeführt und mittels des dritten Außengewindes 192 der Sicherungshülse 168 verschraubt. Ein oder mehrere Zentrierbolzen 156 können mit dem ersten Abschnitt 166 bis zu einem Teil der Zentrierhülse 182 aus den entsprechenden Bohrungen 152 hervorstehen.

In einem nächsten Schritt S4 werden in analoger Weise Lagerbolzen in die übrigen ersten Bohrungen 152 eingeschraubt.

Die Lagerbolzen stehen ebenfalls aus den ersten Bohrungen 152 hervor, eventuell nicht so weit wie die Zentrierbolzen 156.

In einem nächsten Schritt S5 werden die beiden Bauteile 146, 148 zueinander ausgerichtet, so dass die ersten Bohrungen 152 fluchtend zu den Durchgangsbohrungen 154 des zweiten Bauteils 148 angeordnet sind. Dies geschieht beispielsweise mit Hilfe von Kran- oder Hebevorrichtungen.

In einem nächsten Schritt S6 werden die beiden Bauteile 146, 148 zusammengefügt. Dabei werden die Zentrierbolzen 156 aufgrund ihres Überstands im Vergleich zu den Lagerbolzen zuerst in die entsprechenden Bohrungen eingeführt, so dass eine gewisse Vorzentrierung stattfindet. Das Einführen wird durch die Fasen 210 am ersten axialen Ende 162 sowie die erste Fase 204 erleichtert. Anschließend werden alle Lagerbolzen in die entsprechenden zweiten Bohrungen 154 eingeführt. Die Bauteile 146, 148 werden formschlüssig zusammengefügt, so dass sich die Passflächen 200 der Flanschanschlüsse 128, 150 berühren. In dem Flanschbereich 198 sind die Zentrierhülsen 182 angeordnet. Dadurch werden die beiden Bauteile 146, 148 zueinander zentriert.

In einem nächsten Schritt S7 werden sämtliche Zentrierbolzen 156 und Lagerbolzen mit Bolzenmuttern gesichert, so dass die Flanschverbindung 144 hergestellt ist. Dabei kann vorteilhaft sein, zunächst die Zentrierbolzen 156 zu sichern, ehe die restlichen Bolzen gesichert werden.

In einem weiteren Schritt S8 werden die Zentrierbolzen 156 wieder entsichert, d.h. die Bolzenmuttern entfernt, und die Zentrierbolzen 156 demontiert. Hierzu werden die Zentrierbolzen 156 von der Seite des ersten axialen Endes 162 aus den Bohrungen 152, 154 herausgeführt. Dabei werden die Zentrierbolzen 156 gedreht um die Schraubverbindung in der Lagerhülse 142 zu lösen und herausgezogen. Durch den oben beschrieben Aufbau, insbesondere die axiale Sicherung der Zentrierhülse 182, die Drehbarkeit der Zentrierhülse 182, das Linksgewinde sowie die Einstückigkeit der Zentrierhülse 182, können die Zentrierbolzen 156 vollständig aus den Bohrungen entfernt werden.

In einem weiteren Schritt S9 werden Lagerbolzen in die vormals von Zentrierbolzen belegten Bohrungen montiert, so dass die Flanschverbindung 144 ausschließlich über die bestimmungsgemäß vorgesehenen Lagerbolzen hergestellt ist.

Es sei erwähnt, dass die oben beschrieben Flanschverbindung 144 auch für andere Bauteile der Windenergieanlage geeignet ist, beispielsweise die Verbindung der beiden Rotorblattsegmente 132, 134.

Dem Fachmann erschließt sich anhand der obigen Beschreibung eines Ausführungsbeispiels und der einleitenden Beschreibung, dass die Ausbildung des Zentrierbolzens bezüglich der Längsachse 160 auch in umgekehrter Richtung erfolgen kann und damit auch die Montage verändert ist. In einem solchen, nicht gezeigten Ausführungsbeispiel ist der Zentrierbolzen 156 so ausgebildet, dass dieser mit dem ersten Ende 162 in die Lagerhülse 142 des ersten Bauteils 146 geschraubt wird. In diesem Fall ist der erste Abschnitt 166 des Schafts 158 der Lagerhülse 140 zugeordnet und weist ein Außengewinde zum Einschrauben in die Lagerhülse 142 auf. Es folgt der zweite Abschnitt 170 mit verringertem Durchmesser und mit aufgeschobener Zentrierhülse 182. Die Zentrierhülse 182 ist wiederum axial gesichert, etwa mittels einer Sicherungshülse 186, die auf den zweiten oder einen dritten Abschnitt 170, 174 des Schafts 158 aufgeschraubt ist. Abstandshülsen 184 können, müssen aber nicht zwischen Sicherungshülse 186 und Zentrierhülse 182 angeordnet sein. Der zweite oder dritte Abschnitt 170, 174 weist ein Außengewinde auf, welches aus dem zweiten Bauteil 148 herausragt und über welches der Zentrierbolzen 154 am zweiten Bauteil 148 gesichert wird, insbesondere mittels einer Bolzenmutter.

Auch bei dieser im Wesentlichen umgekehrten Ausbildung ergeben sich die genannten Vorteile und Funktionen, wobei sich insbesondere die Zentrierbolzen 156 nach der Montage wieder rückstandsfrei aus den Bauteilen 146, 148 entfernen und durch entsprechende Blattbolzen ersetzen lassen.

### BEZUGSZEICHENLISTE

- 100: Windenergieanlage
- 102: Turm
- 104: Fundament
- 106: Gondel
- 108: Rotor
- 110: Rotorblatt
- 112: Rotornabe
- 114: Rotorblattwurzelbereich
- 116: Übergangsbereich
- 118: Profilbereich
- 120: Längserstreckungsrichtung
- 122: Druckseite
- 124: Saugseite
- 126: Rotorblattanschluss
- 128: Flanschanschluss
- 136: Flanscheinleger
- 138: innere Laminatlage
- 140: äußere Laminatlage
- 142: Lagerhülse
- 144: Flanschverbindung
- 146: erstes Bauteil
- 148: zweites Bauteil
- 150: weiterer Flanschanschluss
- 152: erste Bohrung
- 154: zweite Bohrung
- 156: Zentrierbolzen
- 158: Schaft
- 160: Längsachse
- 162: erstes, axiales Ende
- 164: zweites, axiales Ende
- 166: erster Abschnitt
- 168: erster Außendurchmesser
- 170: zweiter Abschnitt
- 172: zweiter Außendurchmesser
- 174: dritter Abschnitt
- 176: dritter Außendurchmesser
- 178: erstes Außengewinde
- 180: Wellenabsatz
- 182: Zentrierhülse
- 184: Abstandshülse
- 186: Sicherungshülse
- 188: Innengewinde
- 190: zweites Außengewinde
- 192: drittes Außengewinde
- 194: zweites Innengewinde
- 196: Hülsenaußendurchmesser
- 198: Flanschbereich
- 200: Passfläche
- 202: zugewandtes axiales Ende
- 204: erste Fase
- 205: Passbereich
- 206: abgewandtes axiales Ende
- 208: zweite Fase
- 210: dritte Fase

## Patentansprüche

1. Zentrierbolzen (156) für die Herstellung einer Flanschverbindung (144) zwischen zwei Bauteilen (146, 148) einer Windenergieanlage (100), insbesondere zwischen einem Rotorblatt (110) und einer Rotornabe (112) oder zwischen einer Rotorwelle und einer Rotornabe (112), aufweisend
- einen Schaft (158), wobei der Schaft (158)
- eine Längsachse (160) aufweist, und
- entlang der Längsachse (160) einen ersten Abschnitt (166) mit einem ersten Außendurchmesser (168) und einem dem ersten Abschnitt (166) nachfolgenden zweiten Abschnitt (170) aufweist, der einen im Vergleich zu dem ersten Außendurchmesser (168) kleineren zweiten Außendurchmesser (172) aufweist,
- eine Zentrierhülse (182), die auf den zweiten Abschnitt (170) des Schafts (158) aufgeschoben ist, wobei die Zentrierhülse (182)
- um die Längsachse (160) drehbar am Schaft (158) gelagert ist,
- axial bezüglich der Längsachse (160) gegen Verschieben gesichert ist, und
- einen Hülsenaußendurchmesser (196) aufweist, der größer als der erste Außendurchmesser (168) ist,
wobei der Zentrierbolzen (156) ausgebildet ist, zum Herstellen der Flanschverbindung (144) in zwei zueinander fluchtenden Bohrungen (152, 154) von Flanschanschlüssen (128, 150) der beiden zu verbindenden Bauteile (146, 148) derart montiert zu werden, dass die Zentrierhülse (182) in den zwei fluchtenden Bohrungen (152, 154) zum Zentrieren der Bauteile (146, 148) angeordnet ist.

2. Zentrierbolzen (156) nach Anspruch 1, wobei die Zentrierhülse (182) mittels eines Sicherungsrings axial bezüglich der Längsachse (160) am Schaft (158) formschlüssig gesichert ist.

3. Zentrierbolzen (156) nach Anspruch 1 oder 2, wobei die Zentrierhülse (182) mittels einer Sicherungshülse (186) axial bezüglich der Längsachse (160) am Schaft (158) formschlüssig gesichert ist.

4. Zentrierbolzen (156) nach Anspruch 2 oder 3, wobei zwischen der Sicherungshülse (186) bzw. dem Sicherungsring und der Zentrierhülse (182) noch eine oder mehrere Abstandshülsen (184) angeordnet sind, die auf den Schaft (158) aufgeschoben sind.

5. Zentrierbolzen (156) nach Anspruch 3 oder 4, wobei die Sicherungshülse (186) auf den Schaft (158) aufgeschraubt ist.

6. Zentrierbolzen (156) nach einem der Ansprüche 3 bis 5, wobei die Sicherungshülse (186) auf einen dritten Abschnitt (174) des Schafts (158) aufgeschraubt ist, der nachfolgend zu dem ersten und zweiten Abschnitt (166, 170) angeordnet ist und einen dritten Außendurchmesser (176) aufweist, der kleiner als der zweite Außendurchmesser (172) ist.

7. Zentrierbolzen (156) nach einem der Ansprüche 3 bis 6, wobei die Sicherungshülse (186) ein Außengewinde (192) zum Einschrauben in ein Innengewinde (194) des einen der beiden Bauteile (146, 148) aufweist.

8. Zentrierbolzen (156) nach einem der Ansprüche 3 bis 7, wobei die Sicherungshülse (186) ein Material aufweist, welches Notlaufeigenschaften gewährleistet.

9. Zentrierbolzen (156) nach einem der vorhergehenden Ansprüche, wobei die Zentrierhülse (182) bezüglich der Längsachse (160) an einem dem ersten Abschnitt (166) zugewandten axialen Ende (202) einen ersten konisch zulaufenden Abschnitt oder erste Fase (204) aufweist.

10. Zentrierbolzen (156) nach einem der vorhergehenden Ansprüche, wobei die Zentrierhülse (182) bezüglich der Längsachse (160) an einem dem ersten Abschnitt (166) abgewandten axialen Ende (206) einen zweiten konisch zulaufenden Abschnitt oder zweite Fase (208) aufweist.

11. Zentrierbolzen (156) nach Anspruch 10, wobei die zweite Fase (208) als Anschlagsfläche bei der Montage in einer Bohrung (152) eines der beiden Bauteile (146, 148) dient.

12. Zentrierbolzen (156) nach einem der vorhergehenden Ansprüche, wobei die Zentrierhülse (182) ein Gleitmaterial aufweist, welches Notlaufeigenschaften gewährleistet.

13. Verfahren zum Herstellen einer Flanschverbindung (144) zwischen zwei Bauteilen (146, 148) einer Windenergieanlage (100), insbesondere zwischen einem Rotorblatt (110) und einer Rotornabe (112) oder zwischen einer Rotorwelle und einer Rotornabe (112), aufweisend die Schritte:
- Bereitstellen eines Zentrierbolzens (156) nach einem der Ansprüche 1 bis 12,
- Bereitstellen einer Vielzahl von Lagerbolzen,
- Montieren des Zentrierbolzens (156) in einer entsprechenden Bohrung (152) eines Flanschanschlusses (128) des ersten Bauteils (146), so dass dieser aus den entsprechenden Bohrungen (152) herausragt,
- Montieren der Vielzahl von Lagerbolzen in entsprechenden Bohrungen (152) des Flanschanschlusses (150) des ersten Bauteils (146), so dass diese aus den entsprechenden Bohrungen (152) herausragen,
- Ausrichten der beiden Bauteile (146, 148) derart, dass die Bohrungen (152) des Flanschanschlusses (128) des ersten Bauteils (146) und Bohrungen (154) eines Flanschanschlusses (150) des zweiten Bauteils (148) fluchtend zueinander angeordnet sind,
- Zusammenfügen der beiden Bauteile (146, 148) und Einführen sämtlicher montierter Bolzen in die entsprechenden Bohrungen (154) des Flanschanschlusses (150) des zweiten Bauteils (148), so dass die Zentrierhülse (182) des Zentrierbolzens (156) in zwei entsprechenden zueinander fluchtenden Bohrungen (152, 154) angeordnet ist und dadurch die beiden Bauteile (146, 148) zueinander zentriert werden;
- Sichern des Zentrierbolzens (156) und der Lagerbolzen zum Herstellen der Flanschverbindung (144).

14. Verfahren nach Anspruch 13, wobei der Zentrierbolzen (156) nach dem Herstellen der Flanschverbindung (144) aus den Bohrungen (152, 154) demontiert und durch einen Lagerbolzen ersetzt wird.

15. Flanschverbindung (144) zwischen zwei Bauteilen (146, 148) einer Windenergieanlage (100), insbesondere zwischen einem Rotorblatt (110) und einer Rotornabe (112) oder zwischen einer Rotorwelle und einer Rotornabe (112), wobei
- jedes Bauteil (146, 148) einen Flanschanschluss (128, 150) mit mehreren Bohrungen (152, 154) aufweist,
- die Bauteile (146, 148) so aneinander angeordnet und verbunden sind, dass die Bohrungen (152, 154) zueinander fluchten,
- wobei ein oder mehrere Zentrierbolzen (156) nach einem der Ansprüche 1 bis 12 in jeweils zwei zueinander fluchtenden Bohrungen (152, 154) der Flanschanschlüsse (128, 150) beider Bauteile (146, 148) montiert sind, so dass jede Zentrierhülse (182) eines Zentrierbolzens (156) in den jeweils zwei fluchtenden Bohrungen (152, 154) zum Zentrieren der Bauteile (146, 148) angeordnet ist.

## Claims

1. A centering bolt (156) for producing a flange joint (144) between two components (146, 148) of a wind turbine (100), in particular between a rotor blade (110) and a rotor hub (112), or between a rotor shaft and a rotor hub (112), comprising
- a shaft (158), wherein the shaft (158) has
- a longitudinal axis (160), and,
- along the longitudinal axis (160) a first portion (166) having a first outside diameter (168), and a second portion (170) following the first portion (166), which has a smaller second outside diameter (172) as compared to the first outside diameter (168),
- a centering sleeve (182) pushed onto the second portion (170) of the shaft (158), wherein the centering sleeve (182)
- is mounted to the shaft (158) rotatably about the longitudinal axis (160),
- is axially secured against shifting with respect to the longitudinal axis (160),
- has a sleeve outside diameter (196) which is larger than the first outside diameter (168),
wherein the centering bolt (156), for producing the flange joint (144), is formed to be mounted in two mutually aligned bores (152, 154) of flange connections (128, 150) of the two components (146, 148) to be joined, in such a manner that the centering sleeve (182) is arranged within the two aligned bores (152, 154) for centering the components (146, 148) .

2. The centering bolt (156) according to claim 1, wherein the centering sleeve (182) is axially secured in a form-fit manner by means of a retaining ring to the shaft (158) with respect to the longitudinal axis (160).

3. The centering bolt (156) according to claim 1 or 2, wherein the centering sleeve (182) is axially secured in a form-fit manner by means of a securing sleeve (186) to the shaft (158) with respect to the longitudinal axis (160).

4. The centering bolt (156) according to claim 2 or 3 , wherein, between the securing sleeve (186) respectively the retaining ring and the centering sleeve (182), one or more spacer sleeves (184) are still arranged, which are pushed onto the shaft (158).

5. The centering bolt (156) according to claim 3 or 4, wherein the securing sleeve (186) is screwed onto the shaft (58) .

6. The centering bolt (156) according to any one of claims 3 to 5, wherein the securing sleeve (186) is screwed onto a third portion (174) of the shaft (158), which is arranged following the first and second portions (166, 170) and has a third outside diameter (176), which is smaller than the second outside diameter.

7. The centering bolt (156) according to any one of claims 3 to 6, wherein the securing sleeve (186) has an external thread (192) for screwing into an internal thread (194) of the one of the two components (146, 148).

8. The centering bolt (156) according to any one of claims 3 to 7, wherein the securing sleeve (186) has a material ensuring dry-running properties.

9. The centering bolt (156) according to any one of the preceding claims, wherein the centering sleeve (182), at an axial end (202) facing the first portion (166), has a first conically tapering portion or a first chamfer (204) with respect to the longitudinal axis (160).

10. The centering bolt (156) according to any one of the preceding claims, wherein the centering sleeve (182), at an axial end (206) facing away from the first portion (166), has a second conically tapering portion or a second chamfer (208) with respect to the longitudinal axis (160).

11. The centering bolt (156) according to claim 10, wherein the second chamfer (208) serves as a stop surface when mounting within a bore (152) of one of the two components (146, 148).

12. The centering bolt (156) according to any one of the preceding claims, wherein the centering sleeve (182) has a sliding material ensuring dry-running properties.

13. A method for producing a flange joint (144) between two components (146, 148) of a wind turbine (100), in particular between a rotor blade (110) and a rotor hub (112), or between a rotor shaft and a rotor hub (112), comprising the steps of:
- providing a centering bolt (156) according to any one of claims 1 to 12,
- providing a plurality of bearing bolts,
- mounting the centering pin (156) in a corresponding bore (152) of a flange connection (128) of the first component (146) so that the centering bolt protrudes out from the corresponding bores (152),
- mounting the plurality of bearing bolts in corresponding bores (152) of the flange connection (150) of the first component (146) so that the bearing bolts protrude out from the corresponding bores (152),
- aligning the two components (146, 148) in such a manner that the bores (152) of the flange connection (128) of the first component (146) and the bores (154) of a flange connection (150) of the second component (148) are arranged mutually aligned,
- joining the two components (146, 148) and inserting the totality of mounted bolts into the corresponding bores (154) of the flange connection (150) of the second component (148) so that the centering sleeve (182) of the centering bolt (156) is arranged in two corresponding mutually aligned bores (152, 154), and the two components (146, 148) thereby are mutually centered;
- securing the centering bolt (156) and the bearing bolt for producing the flange joint (144).

14. The method according to claim 13, wherein the centering bolt (156), after producing the flange joint (144), is disassembled from the bores (152, 154) and replaced by a bearing bolt.

15. A flange joint (144) between two components (146, 148) of a wind turbine (100), in particular between a rotor blade (110) and a rotor hub (112), or between a rotor shaft and a rotor hub (112), wherein
- each component (146, 148) has a flange connection (128, 150) with several bores (152, 154),
- the components (146, 148) are mutually arranged and connected so that the bores (152, 154) are mutually aligned,
- wherein one or more centering bolts (156) according to any one of claims 1 to 12 each are mounted in two mutually aligned bores (152, 154) of the flange connections (128, 150) of both components (146, 148) so that each centering sleeve (182) of one centering bolt (156) is arranged within each of the two aligned bores (152, 154) for centering the components (146, 148).

## Revendications

1. Boulon de centrage (156) destiné à la réalisation d'une connexion à bride (144) entre deux composants (146, 148) d'une éolienne (100), en particulier entre une pale de rotor (110) et un moyeu de rotor (112) ou entre un arbre de rotor et un moyeu de rotor (112), présentant
- un fût (158), sachant que le fût (158)
- présente un axe longitudinal (160), et
- présente le long de l'axe longitudinal (160) un premier tronçon (166) d'un premier diamètre extérieur (168) et un deuxième tronçon (170) consécutif au premier tronçon (166), qui présente un deuxième diamètre extérieur (172) plus petit en comparaison avec le premier diamètre extérieur (168),
- une douille de centrage (182) qui est emmanchée sur le deuxième tronçon (170) du fût (158), sachant que la douille de centrage (182)
- est logée sur le fût (158) de manière rotative autour de l'axe longitudinal (160),
- est arrêtée axialement par rapport à l'axe longitudinal (160) contre toute translation, et
- présente un diamètre extérieur de douille (196) qui est plus grand que le premier diamètre extérieur (168),
sachant que le boulon de centrage (156) est constitué pour être monté, pour la réalisation de la connexion à bride (144), dans deux alésages (152, 154) en alignement l'un par rapport à l'autre de raccords à bride (128, 150) des deux composants (146, 148) à relier de telle manière que la douille de centrage (182) soit disposée dans les deux alésages (152, 154) en alignement pour le centrage des composants (146, 148).

2. Boulon de centrage (156) selon la revendication 1, sachant que la douille de centrage (182) est arrêtée par adhérence de forme sur le fût (158) axialement par rapport à l'axe longitudinal (160) moyennant une bague d'arrêt.

3. Boulon de centrage (156) selon la revendication 1 ou 2, sachant que la douille de centrage (182) est arrêtée par adhérence de forme sur le fût (158) axialement par rapport à l'axe longitudinal (160) moyennant une douille d'arrêt (186).

4. Boulon de centrage (156) selon la revendication 2 ou 3, sachant qu'encore une ou plusieurs douilles d'entretoise (184) qui sont emmanchées sur le fût (158) sont disposées entre la douille d'arrêt (186) ou la bague d'arrêt et la douille de centrage (182).

5. Boulon de centrage (156) selon la revendication 3 ou 4, sachant que la douille d'arrêt (186) est vissée sur le fût (158) .

6. Boulon de centrage (156) selon l'une des revendications 3 à 5, sachant que la douille d'arrêt (186) est vissée sur un troisième tronçon (174) du fût (158) qui est disposé consécutivement au premier et au deuxième tronçon (166, 170) et présente un troisième diamètre extérieur (176) qui est plus petit que le deuxième diamètre extérieur (172).

7. Boulon de centrage (156) selon l'une des revendications 3 à 6, sachant que la douille d'arrêt (186) présente un filetage extérieur (192) destiné à être vissé dans un filetage intérieur (194) de l'un des deux composants (146, 148) .

8. Boulon de centrage (156) selon l'une des revendications 3 à 7, sachant que la douille d'arrêt (186) présente un matériau qui garantit des propriétés de fonctionnement d'urgence.

9. Boulon de centrage (156) selon l'une des revendications précédentes, sachant que la douille de centrage (182) présente un premier tronçon à terminaison conique ou un premier chanfrein (204) par rapport à l'axe longitudinal (160) au niveau d'une extrémité (202) axiale tournée vers le premier tronçon (166).

10. Boulon de centrage (156) selon l'une des revendications précédentes, sachant que la douille de centrage (182) présente un deuxième tronçon à terminaison conique ou un deuxième chanfrein (208) par rapport à l'axe longitudinal (160) au niveau d'une extrémité (206) axiale opposée au premier tronçon (166).

11. Boulon de centrage (156) selon la revendication 10, sachant que le deuxième chanfrein (208) sert de face de butée lors du montage dans un alésage (152) d'un des deux composants (146, 148).

12. Boulon de centrage (156) selon l'une des revendications précédentes, sachant que la douille de centrage (182) présente un matériau de glissement qui garantit des propriétés de fonctionnement d'urgence.

13. Procédé destiné à la réalisation d'une connexion à bride (144) entre deux composants (146, 148) d'une éolienne (100), en particulier entre une pale de rotor (110) et un moyeu de rotor (112) ou entre un arbre de rotor et un moyeu de rotor (112), présentant les étapes :
- mise à disposition d'un boulon de centrage (156) selon l'une des revendications 1 à 12,
- mise à disposition d'une pluralité de boulons de palier,
- montage du boulon de centrage (156) dans un alésage (152) correspondant d'un raccord à bride (128) du premier composant (146) de telle sorte que celui-ci dépasse des alésages (152) correspondants,
- montage de la pluralité de boulons de palier dans des alésages (152) correspondants du raccord à bride (150) du premier composant (146) de telle sorte que ceux-ci dépassent des alésages (152) correspondants,
- orientation des deux composants (146, 148) de telle manière que les alésages (152) du raccord à bride (128) du premier composant (146) et des alésages (154) d'un raccord à bride (150) du deuxième composant (148) soient disposés en alignement les uns par rapport aux autres,
- assemblage des deux composants (146, 148) et insertion de tous les boulons montés dans les alésages (154) correspondants du raccord à bride (150) du deuxième composant (148) de telle sorte que la douille de centrage (182) du boulon de centrage (156) soit disposée dans deux alésages (152, 154) correspondants en alignement l'un par rapport à l'autre et de ce fait les deux composants (146, 148) soient centrés l'un par rapport à l'autre ;
- arrêt du boulon de centrage (156) et des boulons de palier pour la réalisation de la connexion à bride (144).

14. Procédé selon la revendication 13, sachant que le boulon de centrage (156) est démonté hors des alésages (152, 154) et remplacé par un boulon de palier après la réalisation de la connexion à bride (144).

15. Connexion à bride (144) entre deux composants (146, 148) d'une éolienne (100), en particulier entre une pale de rotor (110) et un moyeu de rotor (112) ou entre un arbre de rotor et un moyeu de rotor (112), sachant que
- chaque composant (146, 148) présente un raccord à bride (128, 150) présentant plusieurs alésages (152, 154),
- les composants (146, 148) sont disposés l'un contre l'autre et reliés de telle sorte que les alésages (152, 154) soient en alignement les uns par rapport aux autres,
- sachant qu'un ou plusieurs boulons de centrage (156) selon l'une des revendications 1 à 12 sont montés dans respectivement deux alésages (152, 154) en alignement l'un par rapport à l'autre des raccords à bride (128, 150) des deux composants (146, 148) de telle sorte que chaque douille de centrage (182) d'un boulon de centrage (156) soit disposée dans les respectivement deux alésages (152, 154) en alignement pour le centrage des composants (146, 148).
